# EUROPÄISCHE PATENTSCHRIFT

(11) **EP 2 640 997 B1**
(45) Veröffentlichungstag und Bekanntmachung des Hinweises auf die Patenterteilung: **12.08.2015**
(21) Anmeldenummer: 11819074.3
(22) Anmeldetag: 15.11.2011
(51) Int. Cl.: F16D 43/16, F16D 47/00

(54) **SCHALTBARE KUPPLUNG, INSBESONDERE FÜR NEBENAGGREGATE IM PKW**
SWITCHABLE COUPLING, IN PARTICULAR FOR PASSENGER VEHICLE AUXILIARY ASSEMBLIES
DISPOSITIF D'ACCOUPLEMENT DÉBRAYABLE DESTINÉ EN PARTICULIER AUX GROUPES AUXILIAIRES D'UNE VOITURE DE TOURISME

(30) Priorität: 16.11.2010 DE 202010012900 U
(43) Veröffentlichungstag der Anmeldung: 25.09.2013
(73) Patentinhaber: Volkswagen Aktiengesellschaft, 38436 Wolfsburg (DE)
(72) Erfinder: BAUMGART, Rico, 09212 Limbach-Oberfrohna (DE); TENBERGE, Peter, 09123 Chemnitz (DE); AURICH, Jörg, 09126 Chemnitz (DE)
(74) Vertreter: Rumrich, Gabriele
(86) Internationale Anmeldenummer: PCT/DE2011/075272
(87) Internationale Veröffentlichungsnummer: WO 2012/065605

(56) Entgegenhaltungen:
- EP-A2- 1 378 677
- WO-A1-2005/124176
- DE-C- 637 795
- US-A- 3 724 621

## Beschreibung

Die Erfindung betrifft eine schaltbare Kupplung, insbesondere für Nebenaggregate in einem Pkw, mit einem elektrisch, mechanisch, pneumatisch oder hydraulisch aktuiertem Betätigungssystem, zwischen einem, beispielsweise als Riemenscheibe ausgeführten, Antriebselement und einem Abtriebselement, wobei das Betätigungssystem ein Schaltglied beinhaltet, welches bei Aktuierung des Betätigungssystems entgegen der Kraft eines oder mehrerer Rückstellelemente, wie z.B. Federn, zwischen einer Schaltstartstellung und einer Schaltendstellung bewegbar ist, wobei das Schaltglied in der Schaltendstellung eine Wirkverbindung zwischen dem Antriebselement und dem Abtriebselement herstellt, so dass bei drehendem Antriebselement auch das Abtriebselement sowie eine mit dem Abtriebselement verbundene Hilfskupplung in eine Drehbewegung versetzt wird, wobei nach Deaktuierung des Betätigungssystems die auf der Hilfskupplung befindlichen Verriegelungskörpern eine reib- oder/und formschlüssige Wirkverbindung zwischen dem Antriebs- und dem Abtriebselement herstellen, so dass auch nach einer Deaktuierung des Betätigungssystems ein Drehmoment vom Antriebselement zum Abtriebselement geleitet werden kann, wobei die Wirkverbindung erst dann unterbrochen wird, wenn die Drehzahl des Antriebselementes unterhalb eines Grenzwertes abfällt.

Ähnliche Kupplungen finden beispielsweise in Pkws zum Zuschalten von Nebenaggregaten, wie z.B. einem Kältemittelverdichter, Anwendung und werden vom Verbrennungsmotor über einen Riementrieb angetrieben. Um die Nebenaggregate bei Nichtgebrauch vom Riementrieb zu trennen und somit Antriebsenergie einzusparen, kommen schaltbare Kupplungen, wie unter anderem in EP 1378 677 A2 beschrieben, zum Einsatz. Diese Kupplungen werden mit Hilfe einer elektrisch betätigten Magnetspule geschaltet. Sie haben den Nachteil, dass mindestens in einer Schaltstellung für den Schaltzustand "Kupplung = geschlossen" oder den Schaltzustand "Kupplung = offen" das elektrisch aktuierte Betätigungssystem permanent bestromt werden muss und dabei Energie verbraucht, da im geschalteten Zustand der Magnetspule permanent elektrische Leistung zugeführt werden muss, was im Falle der Anwendung in einem Pkw zu einem erhöhten Kraftstoffverbrauch führt.

In der Druckschrift DE 637 795 A wird eine Kupplung beschrieben, welche ein Betätigungssystem beinhaltet, mit dem wiederum eine Reibungskupplung geschaltet werden kann. Mit Hilfe dieser Reibungskupplung wird eine Verbindung zwischen einem Antriebselement mit einem Abtriebselement hergestellt. Eine mit dem Abtriebselement verbundene Hilfskupplung weist bewegliche Fliehgewichte auf, die ab einer bestimmten Drehzahl des Abtriebselementes infolge der wirkenden Fliehkräfte eine kraftschlüssige Wirkverbindung zwischen dem Antriebs- und dem Abtriebselement herstellen, so dass ein Drehmoment vom Antriebselement zum Abtriebselement übertragen werden kann. Sobald diese Wirkverbindung hergestellt ist, kann die Reibungskupplung gelöst werden. Der Nachteil dieser Kupplung besteht nun darin, dass keine Einrichtung vorgesehen ist, mit welcher die Fliehgewichte unterhalb einer bestimmten Drehzahl oder beim Abstellen der Kupplung zuverlässig aus der Wirkverbindung zwischen dem Antriebs- und dem Abtriebselement gebracht werden können. Des Weiteren ist bei dieser Kupplung keine formschlüssige Drehmomentübertragung beschrieben, wodurch die Übertragbarkeit hoher Drehmomente bei gleichzeitig geringem Bauraumbedarf nicht gewährleistet wird. Außerdem kann bei geringen Drehzahlen und den damit verbundenen geringen Fliehkräften der Fall eintreten, dass die Reibkräfte in der Wirkverbindung nicht ausreichen, um das notwendige Abtriebsdrehmoment zuverlässig zu übertragen. Da bei dieser Lösung mit Hilfe der Fliehgewichte auch dann eine Wirkverbindung zwischen dem An- und dem Abtriebselement hergestellt werden kann, wenn das Antriebs- und das Abtriebselement stark unterschiedliche Drehzahlen aufweisen, kann in dem Augenblick, bei dem die Fliehkörper in die Wirkverbindung gelangen, ein Stoß und damit sehr hohe Bauteilbelastungen hervorgerufen werden.

Aus den Druckschriften DE 619 879 A, US 5 014 841 A, DE 34 27 091 A1, WO 2008/014 294 A2 und DE 25 15351 C2 sind Kupplungen bekannt, bei welchen radial betätigbare Klemmelemente bzw. Betätigungsorgane als drehbewegliche Klemmkörper ausgeführt und gegen die Federkraft einer Feder ausrückbar sind, wobei die Klemmelemente bzw. Betätigungsorgane bei diesen Kupplungen ausschließlich als Hilfsorgane ausgeführt sind und nicht unmittelbar zur Übertragung des Drehmomentes dienen.

In den Druckschriften DE 10 2008 031 527 A1 und DE 29 17 448 A1 werden Fliehkraftkupplungen beschrieben, welche Fliehgewichte aufweisen, die in eine einrastende Schaltstellung schwenkbar sind. Der Nachteil dieser Kupplungen besteht darin, dass sich die Fliehgewichte ausschließlich aufgrund der angreifenden Fliehkräfte bewegen, da an den Kupplungen keine Hilfseinrichtungen vorgesehen sind, mit denen das Zu- oder Abschalten beeinflusst werden kann.

Der Erfindung liegt deshalb die Aufgabe zugrunde, eine schaltbare Kupplung,₋insbesondere mit elektrisch, mechanisch, pneumatisch oder hydraulisch aktuiertem Betätigungssystem, zu entwickeln, bei der das Betätigungssystem nur während des Schließ- und Öffnungsvorganges elektrisch bestromt, mechanisch aktuiert oder mit Pneumatik- bzw. Hydraulikdruck betätigt werden muss, weil sich die schaltbare Kupplung danach in den entscheidenden Schaltstellungen für die Schaltzustände "Kupplung = geschlossen" und "Kupplung = offen" aufgrund ihres Aufbaus selbst hält und somit weder im offenen noch im geschlossenen Zustand permanent Leistung benötigt wird. Des Weiteren soll bei der erfindungsgemäßen Kupplung im Zustand "Kupplung = geschlossen" das Drehmoment zuverlässig vom Antriebselement zum Abtriebselement übertragen werden. Außerdem soll die Wirkverbindung zwischen dem Antriebs- und dem Abtriebselement mit Hilfe eines Rückstellelementes sicher unterbrochen werden ("Kupplung = offen"), sobald die Drehzahl des Antriebselementes unter einen bestimmten Grenzwert abfällt. Darüber hinaus sollen beim Schalten der Kupplung keine Stöße oder unzulässig hohe Bauteilbelastungen auftreten.

Diese Aufgabe wird erfindungsgemäß durch eine Kupplung mit den kennzeichnenden Merkmalen des Anspruchs 1 gelöst.

In der erfindungsgemäßen Kupplung ist ein elektrisch, mechanisch, pneumatisch oder hydraulisch aktuiertes Betätigungssystem vorgesehen, welches über ein mit dem Abtriebselement in Verbindung stehendes Schaltglied verfügt, das durch Aktuierung des Betätigungssystems zwischen einer Schaltstartstellung und einer Schaltendstellung entgegen der Kraft eines oder mehrerer energiespeichernder Rückstellelemente, wie z.B. Rückstellfedern, aus der Schaltstartstellung in die Schaltendstellung bewegbar ist.

Wenn beispielsweise das Betätigungselement in Form eines Elektromagneten ausgebildet ist, erfolgt bei dessen Aktuierung die Bewegung des Schaltgliedes entgegen der Kraft des Rückstellelementes aus der Schaltstartstellung in die Schaltendstellung. Nach der Deaktuierung des Betätigungselementes wird das Schaltglied durch die Kraft des Rückstellelementes aus der Schaltendstellung in die Schaltstartstellung bewegt.

Des Weiteren weist die erfindungsgemäße Kupplung eine Hilfskupplung auf, die über einen mit dem Abtriebselement in Verbindung stehenden Flansch verfügt. Dieser Flansch steht wiederum mit dem Schaltglied derart in Verbindung, dass ein Drehmoment vom Antriebselement über das Schaltglied zum Abtriebselement geleitet werden kann. Durch die Aktuierung des Betätigungssystems wird das Schaltglied entgegen der Kraft eines oder mehrerer Rückstellelementes aus der Schaltstartstellung in die Schaltendstellung bewegt. In der Schaltendstellung gelangt eine am Schaltglied befindliche erste Reibfläche mit einer auf einer dem Antriebselement angeordneten zweiten Reibfläche in eine reibschlüssige Wirkverbindung, sodass das Abtriebselement angetrieben werden kann. Des Weiteren sind auf dem Flansch ein oder mehrere Haltebolzen und/oder Führungen angeordnet, wobei auf jedem Haltebolzen bzw. in jeder Führung je ein Verriegelungskörper dreh- oder/und verschiebbeweglich sitzt und die Bewegung jedes Verriegelungskörpers durch wenigstens einen Anschlag auf dem Flansch in einer Richtung begrenzt ist. Weiterhin sind auf dem Flansch ein oder mehrere federnde Rückstellelemente angeordnet, welche die Verriegelungskörper gegen ihre Anschläge drücken. Die Verriegelungskörper und das federnde Rückstellelement sind so gestaltet, dass ab einer bestimmten Drehzahl des Abtriebselementes durch die wirkenden Beschleunigungskräfte die Verriegelungskörper vom Anschlag abheben und sich gegen die Kraft einer oder mehrerer Rückstellelemente bewegen. Nach Deaktuierung des Betätigungssystems gelangen diese Verriegelungskörper in eine reib- oder/und formschlüssige Wirkverbindung mit dem Antriebselement, wobei diese Wirkverbindung auch nach einer Deaktuierung des Betätigungssystems und dem daraus resultierenden Rückstellen des Schaltgliedes aus der Schaltendstellung aufrecht erhalten wird. Daraus ergibt sich der Vorteil, dass ohne weiteren Energieeintrag in das Betätigungselement der Schaltzustand "Kupplung = geschlossen" aufrechterhalten wird und somit das Drehmoment zuverlässig von dem Antriebselement über die Hilfskupplung auf das Abtriebselement übertragen wird, und zwar so lange, bis die Drehzahl des Antriebselementes und damit des Abtriebselementes soweit abfällt, dass die Verriegelungskörper durch die Rückstellkraft der Rückstellelemente aus der Wirkverbindung mit dem Antriebselement gelangen.

Unter bestimmten Bedingungen, wie z.B. kurze Zeit nach der Aktuierung des Betätigungssystems, kann der Fall eintreten, dass zwischen dem Antriebselement und dem Abtriebselement eine erhebliche Drehzahldifferenz vorhanden ist. Diese Drehzahldifferenz kann dazu führen, dass es im Augenblick des Kontaktes zwischen den Verriegelungskörpern und dem Antriebselement zu einem Stoß und damit zu sehr hohen Bauteilbelastungen kommt. Um dies zu verhindern, weist jeder Verriegelungskörper eine erste Wirkfläche auf, die bei Bewegung des Schaltgliedes in Richtung der Schaltendstellung mit einer zweiten Wirkfläche, die sich entweder auf dem Schaltglied oder dem Antriebselement befindet, in Kontakt kommt, so dass die Bewegung der Verriegelungskörper um den Haltebolzen bzw. entlang der Führungsnut vermieden und somit ein stoßartiges Einriegeln der Verriegelungskörper unterbunden wird.

Wird das Betätigungssystem für eine definierte Zeitdauer aktuiert, so kann sichergestellt werden, dass nur eine geringe Drehzahldifferenz zwischen dem Antriebselement und dem Abtriebselement vorhanden ist. Danach wird durch Deaktuierung des Betätigungselementes das Schaltglied durch die Kraft einer oder mehrerer Rückstellelemente in Richtung der Schaltstartstellung bewegt. Dadurch kommen die beiden genannten Wirkflächen am Verriegelungskörper und am Schaltglied bzw. dem Antriebselement außer Kontakt, wodurch sich die Verriegelungskörper um den Haltebolzen bzw. entlang der Führungsnut bewegen können. Durch die wirkenden Beschleunigungskräfte gelangen die Verriegelungskörper dann letztendlich entgegen der Kraft eines oder mehrerer Rückstellelemente mit dem Antriebselement bei minimaler Drehzahldifferenz in eine reib- oder/und formschlüssige Wirkverbindung und das Drehmoment wird somit über die Hilfskupplung vom Antriebselement auf das Abtriebselement übertragen.

Vorzugsweise greifen die federnden Rückstellelemente so an den Verriegelungskörpern an, dass sie diese unterhalb einer bestimmten Drehzahl des Abtriebselements auch noch gegen ein Restklemmmoment außer Eingriff mit dem Antriebselement bringen.

Der Vorteil dieser Erfindung besteht darin, dass das Betätigungssystem nicht mehr elektrisch bestromt, mechanisch betätigt bzw. mit Hydraulik- oder Pneumatikdruck beaufschlagt werden muss, nachdem durch die Verriegelungskörper die Verbindung zwischen dem Antriebselement und dem Abtriebselement hergestellt ist. Somit kann Energie eingespart werden. Darüber hinaus zeichnet sich diese Lösung vor allem durch den geringen Bauraum und das niedrige Gewicht aus.

Die Erfindung wird nachfolgend anhand der Ausführungsbeispiele und zugehörigen Zeichnungen näher erläutert. Es zeigen:
- Figur 1: die Prinzipdarstellung eines Teillängsschnitts durch die Kupplung im Bereich der Lagerung eines Verriegelungskörpers in der Schaltstartstellung für die im Folgende beschriebene Ausführungsform 1,
- Figur 2: die Vorderansicht gemäß Figur 1 aus Richtung des Verriegelungskörpers für die Ausführungsform 1,
- Figur 3 und Figur 3.1: die Darstellung der Hilfskupplung der Ausführungsform 1,
- Figur 4: einen Teillängsschnitt durch die Kupplung in einer Schaltzwischenstellung für die Ausführungsform 1 und
- Figur 5: einen Teillängsschnitt der Kupplung in der Schaltendstellung für die Ausführungsform 1.

Des Weiteren zeigen
- Figur 6: die Prinzipdarstellung durch die Kupplung im Bereich der Lagerung eines Verriegelungskörpers in der Schaltstartstellung für die Ausführungsform 2,
- Figur 7: die Vorderansicht gemäß Figur 6 aus Richtung des Verriegelungskörpers für die Ausführungsform 2,
- Figur 8: die Darstellung der Hilfskupplung der Ausführungsform 2,
- Figur 9: einen Teillängsschnitt durch die Kupplung in einer Schaltzwischenstellung für die Ausführungsform 2 und
- Figur 10: einen Teillängsschnitt der Kupplung in der Schaltendstellung für die Ausführungsform 2.
- Figuren 11 bis 15: die gleichen Prinzipdarstellungen wie die Figuren 6 bis 10, jedoch für die Ausführungsform 3
- Figuren 16 bis 20: diese Darstellungen für die Ausführungsform 4.

### Ausführungsform 1:

In der bevorzugten Ausführungsform 1 wird eine Kupplung gezeigt, deren Antriebselement 2 mittels eines nicht dargestellten Keilrippenriemens über einen ebenfalls nicht dargestellten Antriebsmotor angetrieben wird und mit welcher das Antriebsmoment auf ein Abtriebselement 3, wie z.B. eine Welle, übertragbar ist. Von der Abtriebswelle 3 kann das Drehmoment zum Antrieb von nicht dargestellten Nebenaggregaten des Fahrzeuges, wie z.B. einem Kältemittelverdichter zur Verfügung gestellt werden.

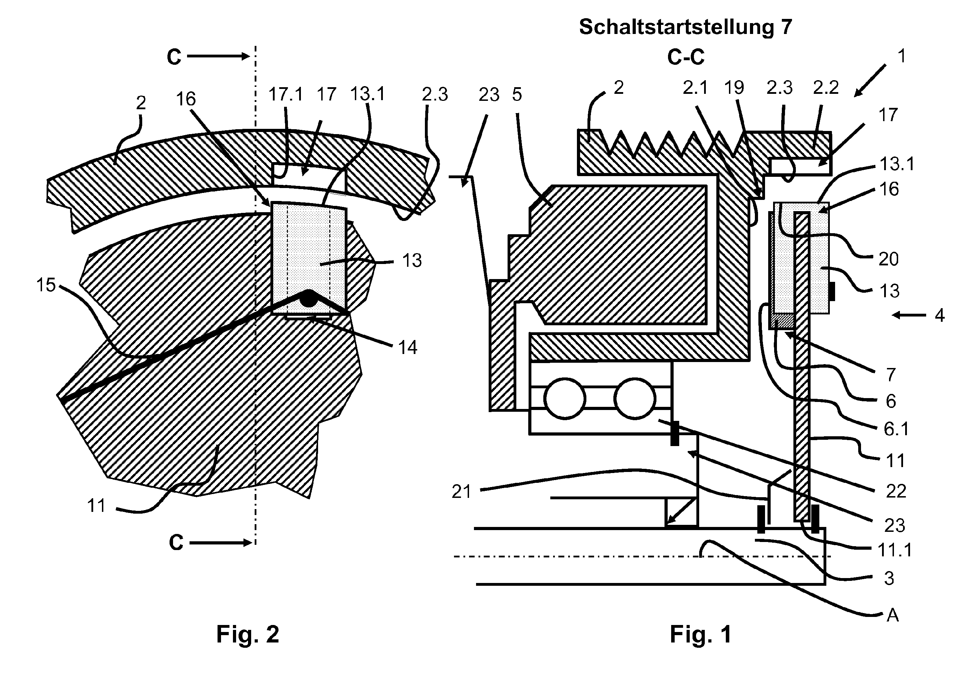

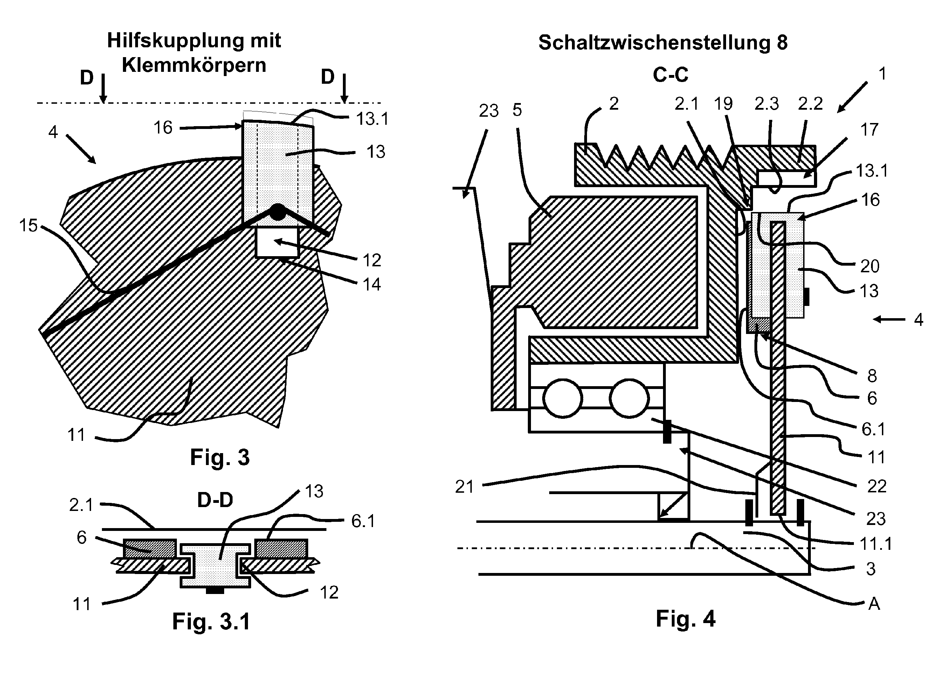

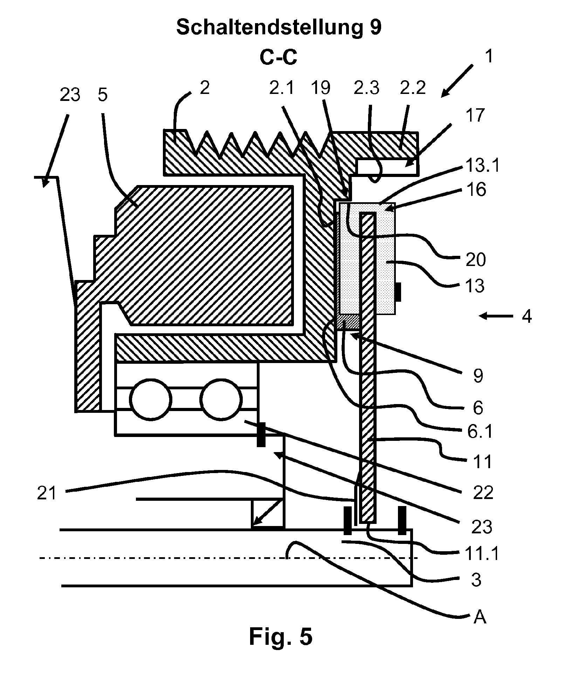

Das hier dargestellte und beschriebene Ausführungsbeispiel 1 weist dazu eine Hilfskupplung 4 sowie ein Betätigungssystem 5 auf, welches hier in Form einer elektrisch betätigbaren Magnetspule ausgebildet ist. Das Betätigungssystem 5 besitzt in dem dargestellten Ausführungsbeispiel 1 ein oder mehrere Schaltglieder 6, die mit dem Flansch 11 verbunden sind. Des Weiteren ist zwischen dem Abtriebselement 3 und dem Flansch 11 ein Rückstellelement 21 angeordnet. Bei Aktuierung des Betätigungselementes 5 wird das Schaltglied 6 entgegen der Kraft dieses Rückstellelementes 21 entlang der Längsachse A
- aus einer Schaltstartstellung 7, in welcher die Verbindung zwischen dem Antriebselement 2 und dem Abtriebselement 3 unterbrochen ist (Figur 1)
- über eine Schaltzwischenstellung 8 (Figur 4)
- in eine Schaltendstellung 9 (Figur 5), in welcher eine Verbindung zwischen dem Antriebselement 2 und dem Abtriebselement 3 besteht,
bewegt.

In der Schaltendstellung 9 (Figur 5) gelangt eine erste Reibfläche 6.1 am Schaltglied 6 mit einer zweiten Reibfläche 2.1 am Antriebselement 2 in Kontakt, wodurch in der Ausführungsform 1 eine reibschlüssige Verbindung zwischen dem Antriebselement 2 und dem Abtriebselement 3 hergestellt wird, so dass das Abtriebselement 3 angetrieben werden kann.

Bei Deaktivierung des Betätigungselementes 5 wird das Schaltglied 6 durch die Kraft des Rückstellelementes 21 entlang der Längsachse A in Richtung der Schaltstartstellung 7 bewegt und somit die reibschlüssige Verbindung zwischen dem Antriebselement 2 und dem Abtriebselement 3 aufgehoben.

Die Hilfskupplung 4 (Figur 3) weist einen Flansch 11 auf, welcher derart mit dem Abtriebselement 3 verbunden ist, dass der Flansch 11 auf dem Abtriebselement 3 in Richtung der Achse A axial beweglich ist und gleichzeitig über den Flansch 11 das notwendige Drehmoment zum Abtriebselement 3 geleitet werden kann. In dem Flansch 11 sind ein oder mehrere Führungen 12 eingebracht. In jeder Führung 12 ist ein Verriegelungskörper 13 verschiebbeweglich angeordnet (Figur 3.1). An jedem Verriegelungskörper befindet sich eine Wirkfläche 16. Die Bewegung jedes Verriegelungskörpers 13 entlang der Führung 12 ist durch wenigstens einen Anschlag 14 (siehe Figur 2) auf dem Flansch 11 in einer Richtung begrenzt. Weiterhin sind auf dem Flansch 11 ein oder mehrere federnde Rückstellelemente 15 angeordnet, welche die Verriegelungskörper 13 gegen diese Anschläge 14 drücken.

Das Antriebselement 2 weist einen sich über die Hilfskupplung 4 erstreckenden Bund 2.2 auf, an dessen Innendurchmesser eine oder mehrere Nuten 17 ausgebildet sind.

Die Verriegelungskörper 13 sowie das federnde Rückstellelement 15 sind derart gestaltet, dass ab einer bestimmten Drehzahl des Abtriebselementes 3 die Verriegelungskörper 13 von den Anschlägen 14 abheben und sich gegen die Kraft des Rückstellelementes 15 in den Führungen 12 bewegen und schließlich jede Wirkfläche 16, die sich an jedem Verriegelungskörper 13 befindet, mit einer Wirkfläche 17.1 in den Nuten 17 des Antriebselementes 2 in Verbindung kommt.

In der dargestellten Ausführungsform 1 kann unter Umständen der Fall eintreten, dass die Verriegelungskörper 13 nicht sofort in die vorgesehenen Nuten 17 einrasten, sondern zunächst die auf jedem Verriegelungskörper 13 befindliche Wirkfläche 13.1 in einen Kontakt mit einer am Antriebselement angebrachten Wirkfläche 2.3 gelangen. Da in diesem Fall die im Kontakt wirkenden Kräfte nicht ausreichen um das am Abtriebselement 3 angeschlossene Aggregat anzutreiben, entsteht ein Differenzdrehmoment, infolgedessen sich die Verriegelungskörper 13 relativ zu den Nuten 17 bewegen, so dass die Verriegelungskörper 13 kurze Zeit später in die Nuten 17 einrasten können.

Um einen zu zeitigen Kontakt der Verriegelungskörper 13 mit dem Antriebselement 2 zu verhindern, weist jeder Verriegelungskörper 13 eine erste Wirkfläche 20 auf. Bei Bewegung des Schaltglieds 6 in Richtung der Schaltendstellung 9 (Figur 5) gelangt ab einer Schaltzwischenstellung 8 (Figur 4) diese erste Wirkfläche 20 mit einer zweiten Wirkfläche 19 am Antriebselement 2 in Kontakt, und zwar in der Art, dass dadurch die Bewegung des Verriegelungskörpers 13 entlang der Führung 12 behindert wird. Erst bei Deaktuierung des Betätigungselementes 5 und der daraus resultierenden Bewegung des Schaltglieds 6 aus der Schaltendstellung 9 in Richtung der Schaltstartstellung 7 kommen diese beiden Wirkflächen 19 und 20 ab der Schaltzwischenstellung 8 wieder außer Kontakt, wodurch sich nun die Verriegelungskörper 13 aufgrund der Beschleunigungskräfte in den Führungen 12 bewegen und mit ihrer Wirkfläche 16 mit der Wirkfläche 17.1 in der Nut 17 in Wirkverbindung kommen, wodurch nun das durch das Antriebselement 2 eingeleitete Drehmoment über die Hilfskupplung 4 formschlüssig auf das Abtriebselement 3 übertragen wird.

Das Antriebselement 2 ist über ein Lager 22 auf einem nur angedeuteten gestellfesten Gehäuse 23 drehbar gelagert. Durch das Gehäuse 23 führt das Abtriebselement 3.

Vorteilhafterweise greift das Rückstellelement 15 so an die Verriegelungskörpern 13 an, dass es die Verriegelungskörper 13 unterhalb einer bestimmten Drehzahl des Abtriebselementes 3 auch noch gegen ein Restklemmmoment außer Eingriff mit der Nut 17 bringt. Wird der nicht dargestellte Antriebsmotor abgeschaltet, werden die Verriegelungskörper 13 durch die Kraft der Rückstellelemente 15 wieder an die Anschläge 14 in ihre Ausgangsposition zurück bewegt und der Kraftfluss zwischen Antriebselement 2 und Abtriebselement 3 unterbrochen.

Das Nebenaggregat des Fahrzeuges, z.B. der Kältemittelverdichter einer Klimaanlage, wird damit abgeschaltet. Beim nächsten Startvorgang des Fahrzeugmotors erfolgt durch die Fahrzeugelektronik die Entscheidung, ob ein erneutes Starten der Klimaanlage erforderlich ist. Ist dies der Fall, wird das Nebenaggregat durch kurzzeitiges Zuschalten des Betätigungselementes 5 aktiviert und über die nun ohne weiteren Strombedarf selbsthaltende Hilfskupplung 4 angetrieben.

Gemäß weiterer nicht dargestellter Ausführungsbeispiele ist es auch möglich, das Schaltglied 6 mittels eines mechanischen, hydraulischen oder pneumatischen Betätigungselementes 5 zu schalten.

### Ausführungsform 2:

Eine weitere Ausführungsform 2 unterscheidet sich von der Ausführungsform 1 durch die im Folgenden beschriebenen Merkmale.

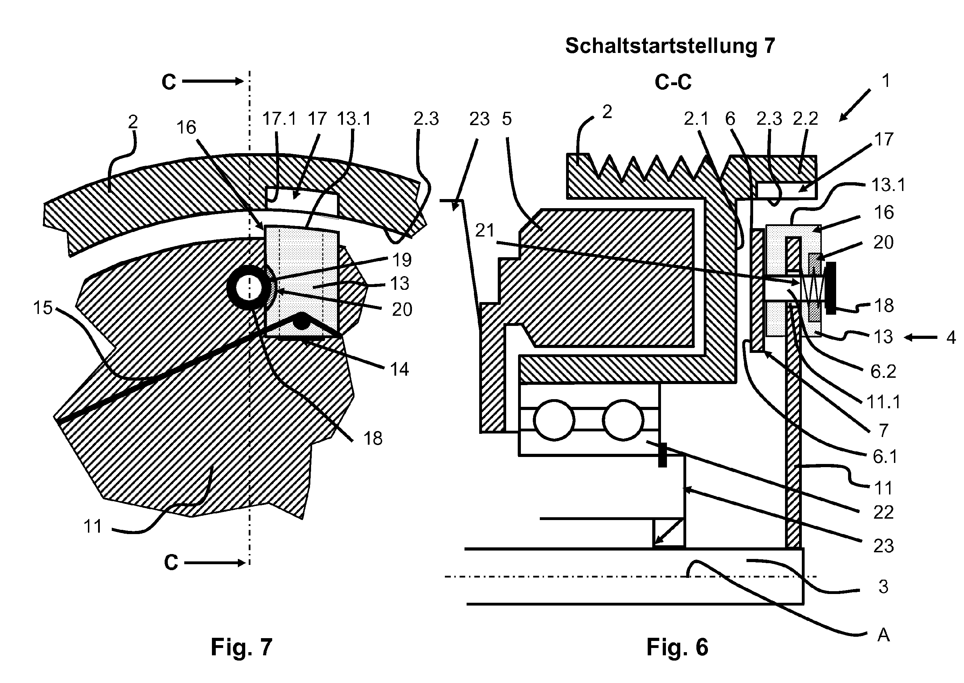

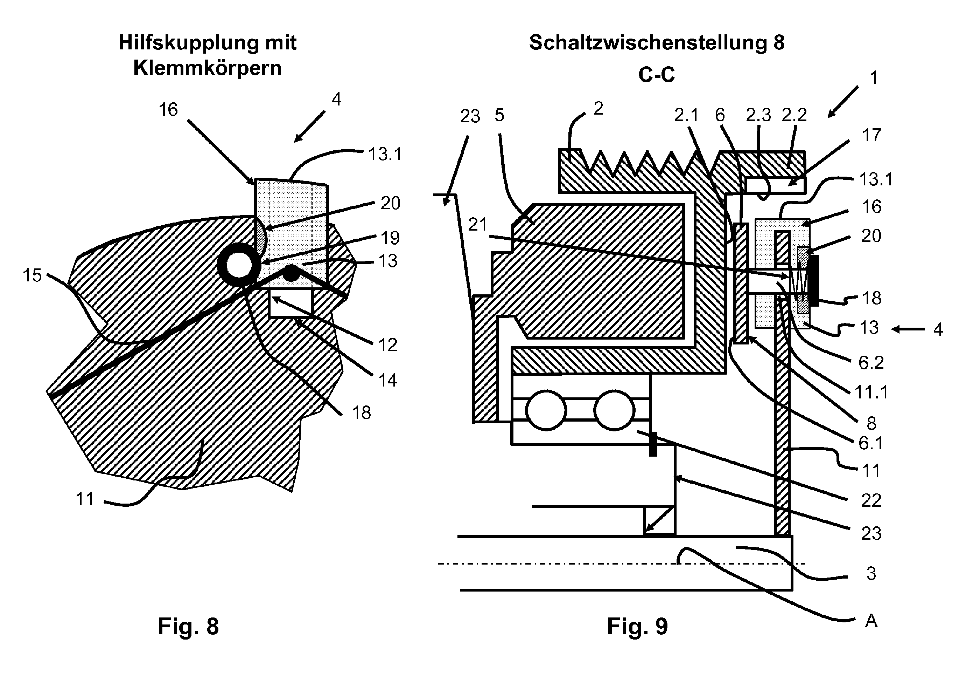

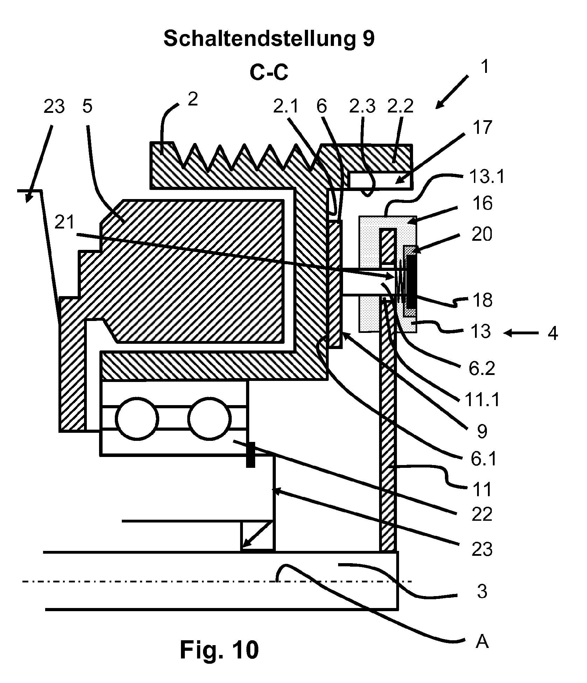

Die Hilfskupplung 4 (Figur 8) weist einen Flansch 11 auf, welcher in der Ausführungsform 2 fest mit dem Abtriebselement 3 verbunden ist. Der Flansch 11 weist ein oder mehrere Führungsbereiche 11.1 auf, die in Wirkverbindung mit einem sich axial erstreckenden Führungsbereich 6.2 am Schaltglied 6 stehen. Durch diese Wirkverbindung ist das Schaltglied 6 zum einen gegenüber dem Flansch 11 in axialer Richtung verschiebbar und zum anderen kann über das Schaltglied 6 ein Drehmoment auf den Flansch 11 übertragen werden. Bei dieser Ausführungsform 2 sind ein oder mehrere Rückstellelemente 21 zwischen dem Flansch 11 und dem Schaltglied 6 angeordnet. Bei Aktuierung des Betätigungselementes 5 wird das Schaltglied 6 aus der Schaltstartstellung 7 entgegen der Kraft dieser Rückstellelemente 21 entlang der Längsachse A in die Schaltendstellung 9 (Figur 10) bewegt. Bei Deaktuierung des Betätigungselementes 5 wird das Schaltglied 6 infolge der Kraft der Rückstellelemente 21 aus der Schaltendstellung 9 wieder entlang der Längsachse A in die Schaltstartstellung 7 (Figur 6) bewegt.

In der dargestellten Ausführungsform 2 kann ebenso wie bei Ausführungsform 1 unter Umständen der Fall eintreten, dass die Verriegelungskörper 13 nicht sofort in die vorgesehenen Nuten 17 einrasten, sondern zunächst die auf jedem Verriegelungskörper 13 befindliche Wirkfläche 13.1 in einen Kontakt mit einer am Antriebselement angebrachten Wirkfläche 2.3 gelangen. Da in diesem Fall die im Kontakt wirkenden Kräfte nicht ausreichen um das am Abtriebselement 3 angeschlossene Aggregat anzutreiben, entsteht ein Differenzmoment, infolgedessen sich die Verriegelungskörper 13 relativ zu den Nuten 17 bewegen, so dass die Verriegelungskörper 13 kurze Zeit später in die Nuten 17 einrasten können und somit die an jedem Verriegelungskörper 13 vorhandene Wirkfläche 16 in Kontakt mit einer Wirkfläche 17.1 gelangt.

Um einen zu zeitigen Kontakt der Verriegelungskörper 13 mit dem Antriebselement 2 zu verhindern, weist das Schaltglied 6 ein oder mehrere Halteelemente 18 auf, wobei sich an jedem Halteelemente 18 eine erste Wirkfläche 19 befindet. Des Weiteren verfügt jeder Verriegelungskörper 13 über eine zweite Wirkfläche 20. Die Anzahl der Verriegelungskörper 13 entspricht der Anzahl der Halteelemente 18. In der Schaltstartstellung 7 (Figur 6) sind die Halteelemente 18 außer Eingriff mit den Verriegelungskörpern 13. Bei der Bewegung des Schaltglieds 6 in Richtung Schaltendstellung 9 (Figur 10) kommt jede Wirkfläche 19 ab einer Schaltzwischenstellung 8 (Figur 9) mit einer zweiten Wirkfläche 20, welche sich an jedem Verriegelungskörper 13 befindet, in Kontakt, und zwar in der Art, dass dadurch die Bewegung des Verriegelungskörpers 13 in der Führung 12 behindert wird (Figur 7). Erst bei Deaktuierung des Betätigungssystems 5 und der daraus resultierenden Bewegung des Schaltglieds 6 aus der Schaltendstellung 9 in Richtung der Schaltstartstellung 7 kommen diese beiden Wirkflächen 19 und 20 ab der Schaltzwischenstellung 8 wieder außer Kontakt, wodurch sich nun die Verriegelungskörper 13 aufgrund der Beschleunigungskräfte in der Führung 12 bewegen können und somit die an jedem Verriegelungskörper 13 befindliche Wirkfläche 16 mit einer Wirkfläche 17.1 in der Nut 17 im Antriebselement 2 in Wirkverbindung kommt, wodurch nun das durch das Antriebselement 2 eingeleitete Drehmoment formschlüssig über die Hilfskupplung 4 auf das Abtriebselement 3 übertragen wird.

### Ausführungsform 3:

Eine weitere Ausführungsform 3 unterscheidet sich von der Ausführungsform 1 insbesondere durch eine veränderte Hilfskupplung mit den im Folgenden beschriebenen Merkmalen.

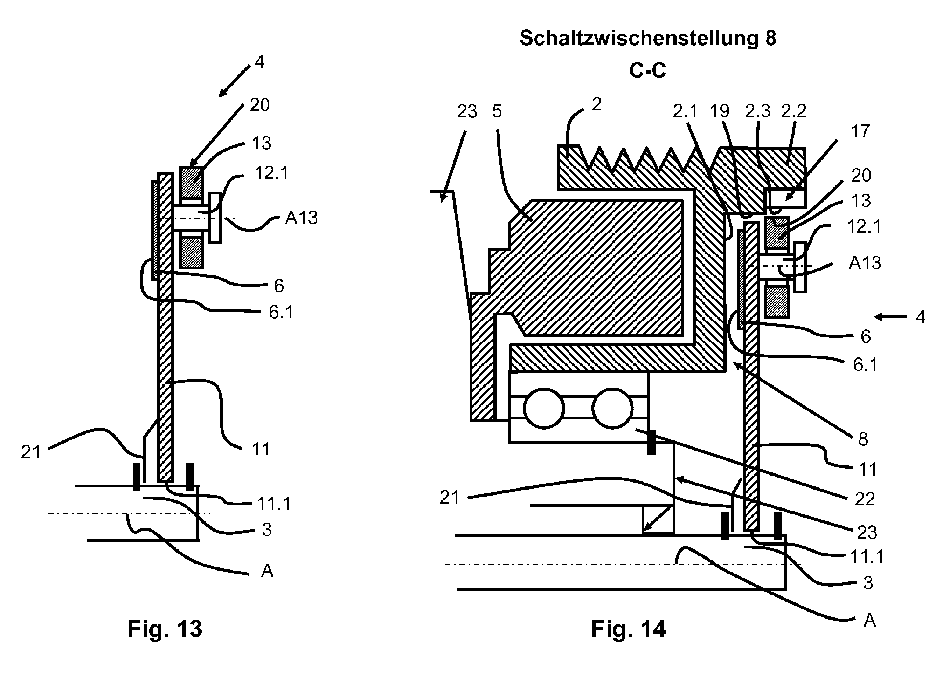

Die Hilfskupplung 4 (Figur 13) weist einen Flansch 11 auf, welcher derart mit dem Abtriebselement 3 verbunden ist, dass der Flansch 11 auf dem Abtriebselement 3 in Richtung der Achse A axial beweglich ist und gleichzeitig über den Flansch 11 das notwendige Drehmoment zum Abtriebselement 3 geleitet werden kann.

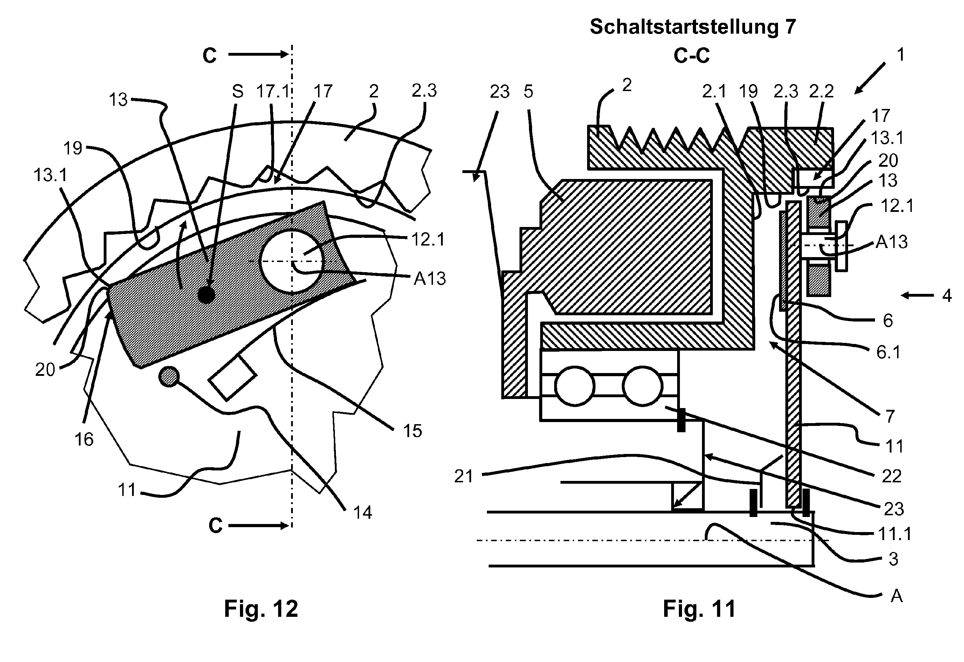

Das Schaltglied 6 ist fest mit dem Flansch 11 verbunden. In dem Flansch 11 sind ein oder mehrere Haltebolzen 12.1 eingebracht, wobei auf jedem Haltebolzen 12.1 je ein Verriegelungskörper 13 drehbeweglich angeordnet ist. Die Bewegung jedes Verriegelungskörpers 13 um den Haltebolzen 12.1 ist durch wenigstens einen Anschlag 14 (siehe Figur 12) auf dem Flansch 11 in einer Drehrichtung begrenzt. Weiterhin sind auf dem Flansch 11 für jeden Verriegelungskörper 13 ein oder mehrere federnde Rückstellelemente 15 angeordnet, welche die Verriegelungskörper 13 gegen diese Anschläge 14 drücken.

Der Schwerpunkt S jedes Verriegelungskörpers 13 liegt außerhalb seiner Drehachse A13 um den Haltebolzen 12.1 (Figur 12), sodass ab einer bestimmten Drehzahl des Abtriebselements 3 die Verriegelungskörper 13 von den Anschlägen 14 abheben und sich gegen die Kraft eines Rückstellelementes 15 um den Haltebolzen 12.1 radial nach außen drehen und schließlich jede Wirkfläche 16 am Verriegelungskörper 13 mit einer Wirkfläche 17.1 in den Nuten 17 des Antriebselementes 2 in Verbindung kommt.

In der dargestellten Ausführungsform 3 kann ebenso wie bei Ausführungsform 1 oder 2 unter Umständen der Fall eintreten, dass die Verriegelungskörper 13 nicht sofort in die vorgesehenen Nuten 17 einrasten, sondern zunächst die auf jedem Verriegelungskörper 13 befindliche Wirkfläche 13.1 in einen Kontakt mit einer am Antriebselement angebrachten Wirkfläche 2.3 gelangen. Da in diesem Fall die im Kontakt wirkenden Kräfte nicht ausreichen um das am Abtriebselement 3 angeschlossene Aggregat anzutreiben, entsteht ein Differenzmoment, infolgedessen sich die Verriegelungskörper 13 relativ zu den Nuten 17 bewegen, so dass die Verriegelungskörper 13 kurze Zeit später in die Nuten 17 einrasten können.

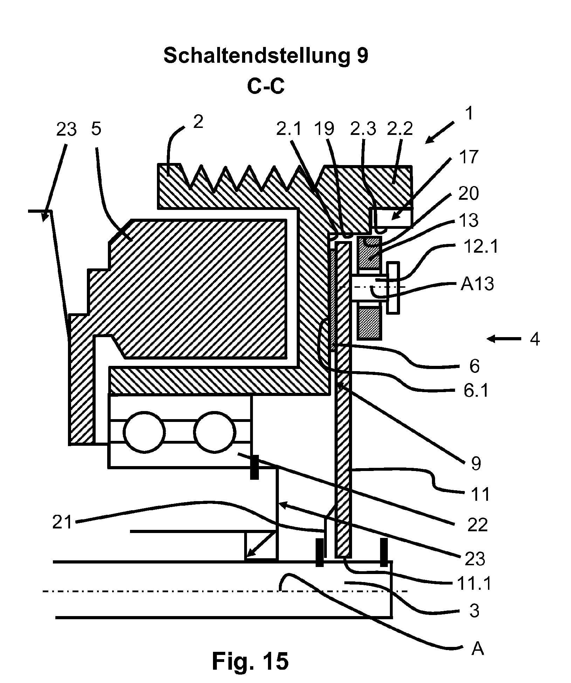

Um einen zu zeitigen Kontakt der Verriegelungskörper 13 mit dem Antriebselement 2 zu verhindern, sind bei der Ausführungsform 3 dieselben Maßnahmen getroffen wie bei Ausführungsform 1. Demnach weist jeder Verriegelungskörper 13 eine erste Wirkfläche 20 auf. Bei Bewegung des Schaltglieds 6 in Richtung der Schaltendstellung 9 (Figur 15) gelangt ab einer Schaltzwischenstellung 8 (Figur 14) diese erste Wirkfläche 20 mit einer zweiten Wirkfläche 19 am Antriebselement 2 in Kontakt, und zwar in der Art, dass dadurch die Bewegung des Verriegelungskörpers 13 um den Haltebolzen 12.1 behindert wird. Erst bei der Bewegung des Schaltglieds 6 aus der Schaltendstellung 9 in Richtung Schaltstartstellung 7 (Figur 11) kommen diese beiden Wirkflächen 19 und 20 ab der Schaltzwischenstellung 8 wieder außer Kontakt, wodurch sich nun die Verriegelungskörper 13 aufgrund der Beschleunigungskräfte um die Haltebolzen 12.1 radial nach außen drehen und mit ihrer Wirkfläche 16 mit der Wirkfläche 17.1 in der Nut 17 in Wirkverbindung kommen, wodurch nun das durch das Antriebselement 2 eingeleitete Drehmoment über die Hilfskupplung 4 formschlüssig auf das Abtriebselement 3 übertragen wird.

### Ausführungsform 4:

Eine weitere hier insbesondere als Reibkupplung ausgebildete Ausführungsform 4 entspricht in ihren wesentlichen Merkmalen der Ausführungsform 2, wobei die Ausführungsform 4 gegenüber der Ausführungsform 2 die im Folgenden beschriebenen Unterschiede aufweist.

Das Antriebselement 2 weist einen sich über die Hilfskupplung 4 erstreckenden Bund 2.2 auf, an dessen Innendurchmesser bei der Ausführungsform 4 eine umlaufende zweite Wirkfläche 2.3 ausgebildet ist.

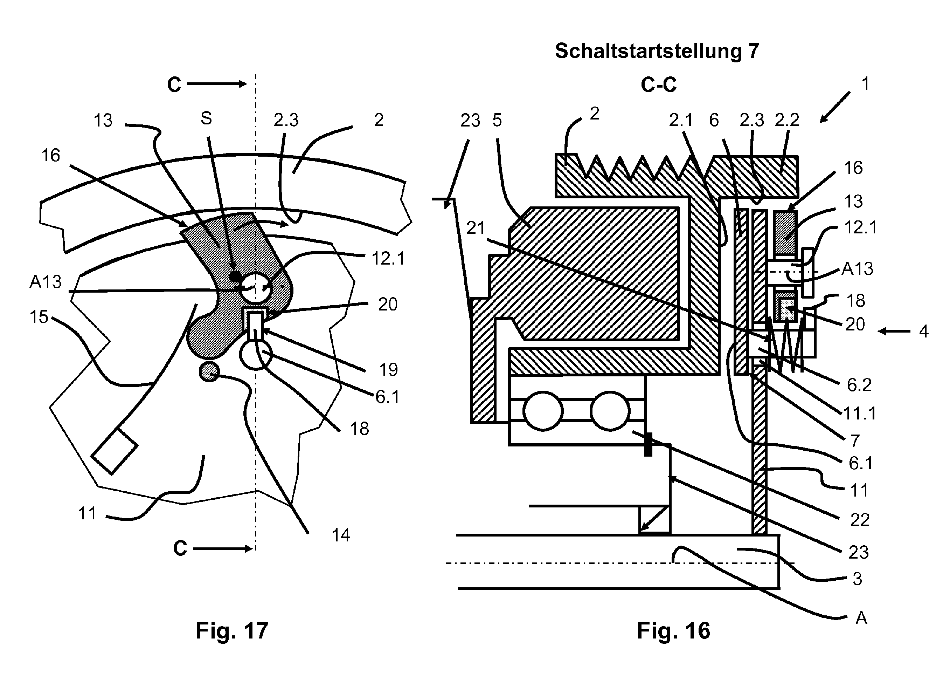

An dem Flansch 11 der Hilfskupplung 4 sind mehrere Haltebolzen 12.1 angeordnet, wobei auf jedem Haltebolzen 12.1 je ein Verriegelungskörper 13 drehbeweglich angeordnet ist. Die Bewegung jedes Verriegelungskörpers 13 um den Haltebolzen 12.1 ist durch wenigstens einen Anschlag 14 (siehe Figur 17) auf dem Flansch 11 in einer Drehrichtung begrenzt. Weiterhin ist auf dem Flansch 11 für jeden Verriegelungskörper 13 ein federndes Rückstellelement 15 angeordnet, welches den Verriegelungskörper 13 gegen diesen Anschlag 14 drückt.

Der Schwerpunkt S jedes Verriegelungskörpers 13 liegt außerhalb seiner Drehachse A13 um den Haltebolzen 12.1 (Figur 17), sodass ab einer bestimmten Drehzahl des Abtriebselements 3 die Verriegelungskörper 13 von den Anschlägen 14 abheben und sich gegen die Kraft der Rückstellelemente 15 radial nach außen drehen und mit ihrer Wirkfläche 16 mit der zweiten Wirkfläche 2.3 des Antriebselementes 2 in Wirkverbindung kommen. Durch die in diesem Kontakt wirkenden Kräfte entsteht eine reibschlüssige Klemmverbindung zwischen dem Antriebselement 2 und dem Abtriebselement 3, die ausreicht, um ein Drehmoment vom Antriebselement 2 zum Abtriebselement 3 zu übertragen.

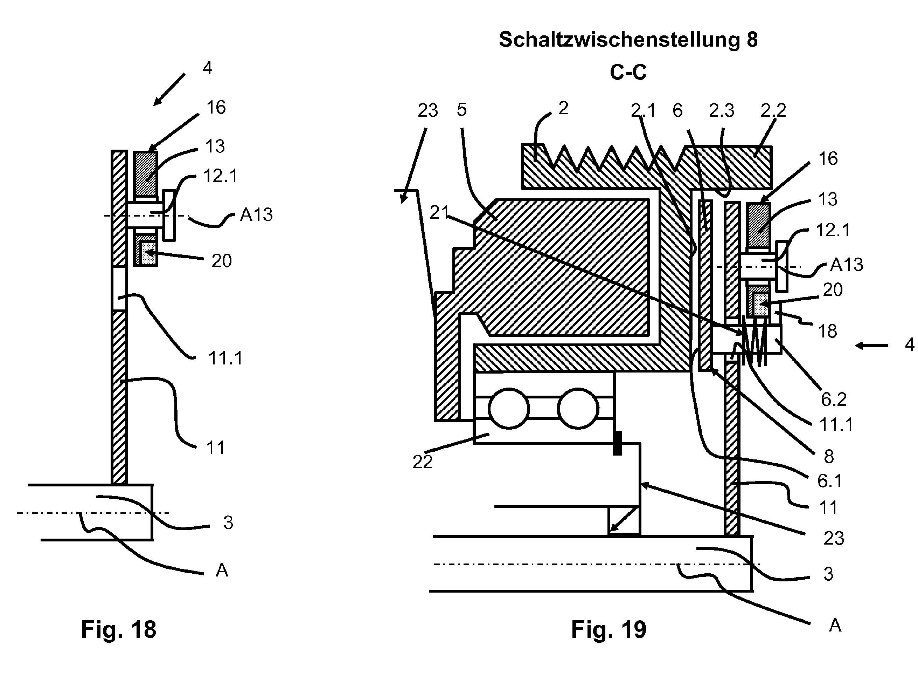

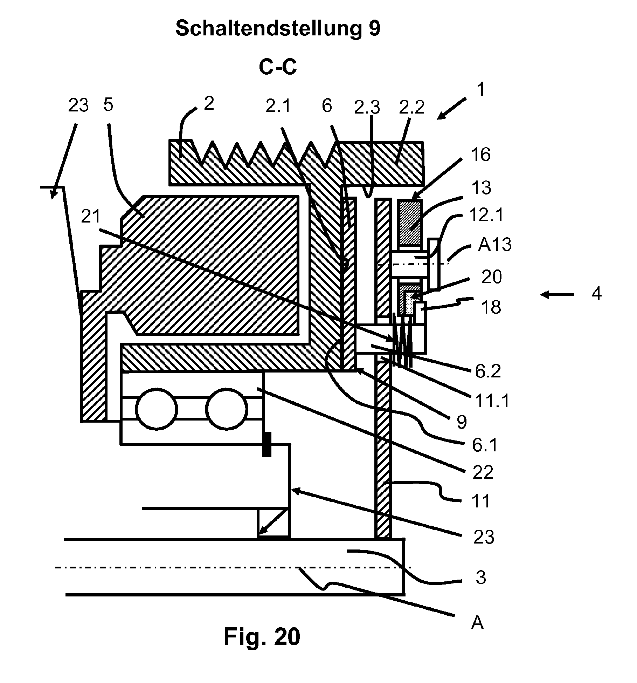

Um einen zu zeitigen Kontakt der Verriegelungskörper 13 mit dem Antriebselement 2 zu verhindern, weist das Schaltglied 6 ein oder mehrere Halteelemente 18 auf, wobei sich an jedem Halteelemente 18 eine erste Wirkfläche 19 befindet. Des Weiteren verfügt jeder Verriegelungskörper 13 über eine zweite Wirkfläche 20. Die Anzahl der Verriegelungskörper 13 entspricht der Anzahl der Halteelemente 18. In der Schaltstartstellung 7 (Figur 16) sind die Halteelemente 18 außer Eingriff mit den Verriegelungskörpern 13. Bei der Bewegung des Schaltglieds 6 in Richtung Schaltendstellung 9 (Figur 20) kommt die Wirkfläche 19 ab einer Schaltzwischenstellung 8 (Figur 19) mit einer zweiten Wirkfläche 20 am Verriegelungskörper 13 in Kontakt, und zwar in der Art, dass dadurch die Bewegung des Verriegelungskörpers 13 um den Haltebolzen 12.1 behindert wird. Erst bei Deaktuierung des Betätigungssystems 5 und der daraus resultierenden Bewegung des Schaltglieds 6 aus der Schaltendstellung 9 in Richtung Schaltstartstellung 7 kommen diese beiden Wirkflächen 19 und 20 ab der Schaltzwischenstellung 8 wieder außer Kontakt, wodurch sich nun die Verriegelungskörper 13 aufgrund der Beschleunigungskräfte um ihre Drehachse A13 drehen und mit ihrer Wirkfläche 16 mit der zweiten Wirkfläche 2.3 in Wirkverbindung kommen, wodurch nun das durch das Antriebselement 2 eingeleitete Drehmoment über die Hilfskupplung 4 reibschlüssig auf das Abtriebselement 3 übertragen wird.

Bei dieser Ausführungsform 4 sind ein oder mehrere Rückstellelemente 21 zwischen dem Flansch 11 und dem Schaltglied 6 angeordnet. Bei Betätigung des Betätigungselementes 5 wird das Schaltglied 6 somit entgegen der Rückstellkraft dieser Rückstellelemente 21 in Richtung zur ersten Reibfläche 2.1 am Antriebselement 2 bewegt. Bei Deaktuierung des Betätigungselementes 5 wird das Schaltglied 6 durch die Rückstellkraft des Rückstellelementes 21 in Richtung zur Schaltstartstellung 7 bewegt.

Vorteilhafterweise greifen die Rückstellelemente 15 so an die Verriegelungskörper 13 an, dass sie deren Wirkfläche 16 unterhalb einer bestimmten Drehzahl des Abtriebselements 3 auch noch gegen ein Restklemmmoment außer Eingriff mit der Wirkfläche 2.3 am Antriebselement 2 bringen. Wird der nicht dargestellte Antriebsmotor abgeschaltet, werden die Verriegelungskörper 13 durch die Kraft der Rückstellelemente 15 wieder in ihre Ausgangsposition zurück bewegt und der Kraftfluss zwischen Antriebselement 2 und Abtriebselement 3 unterbrochen.

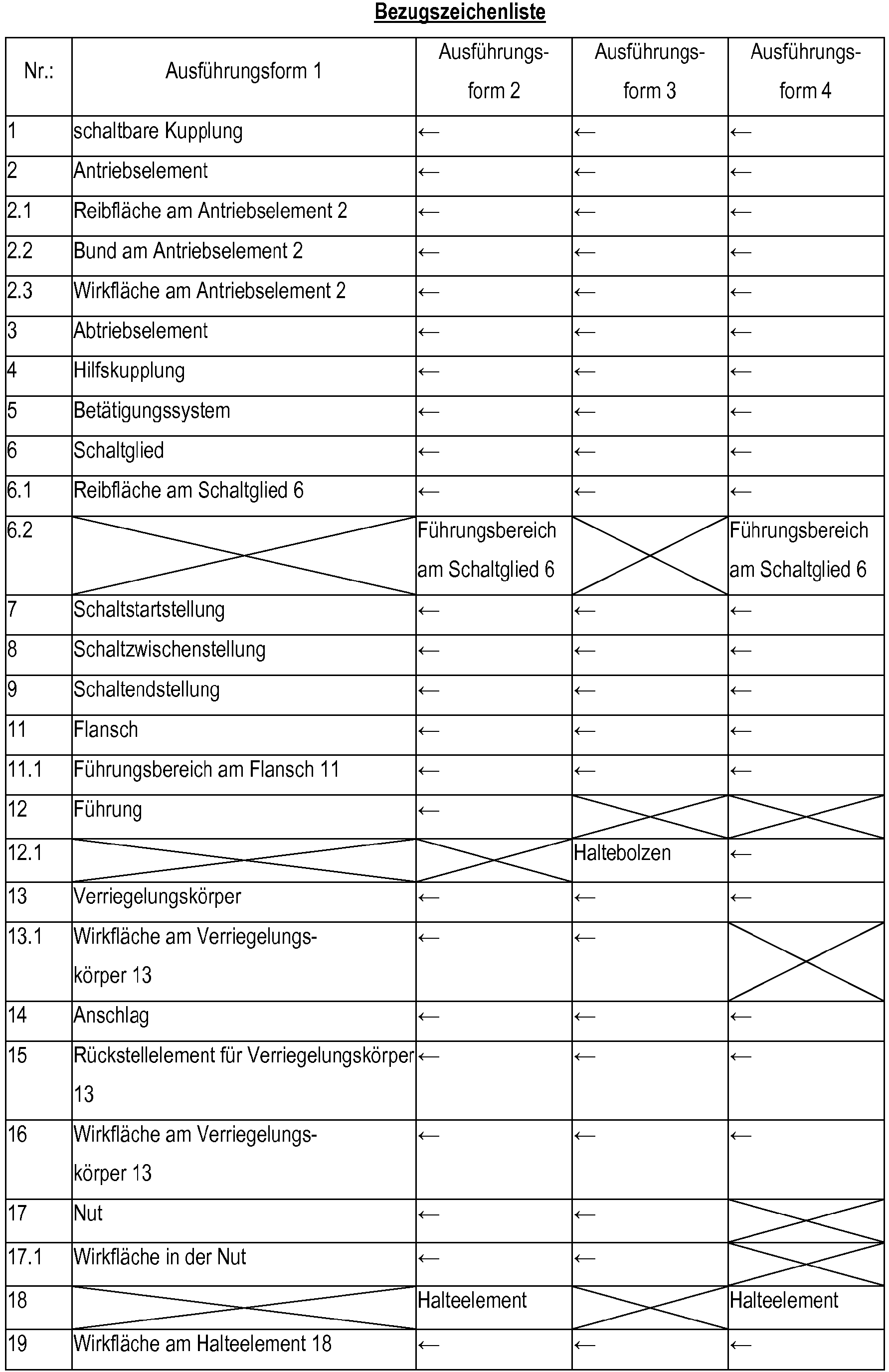

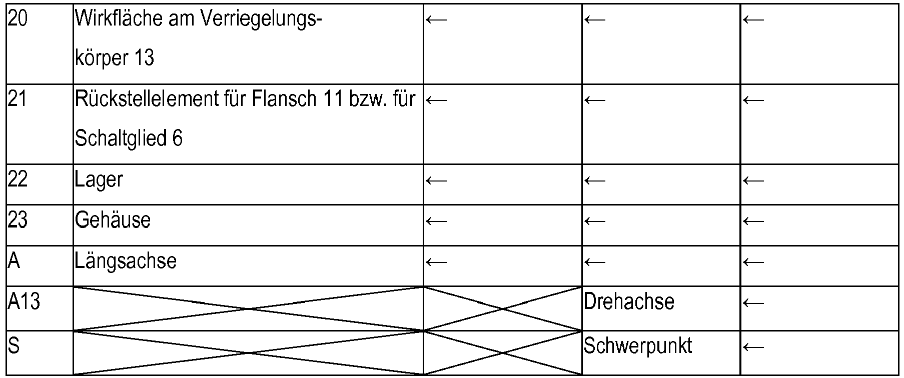

## Patentansprüche

1. Schaltbare Kupplung (1), insbesondere für Nebenaggregate im Pkw, die über ein zwischen einem Antriebselement (2) und einem Abtriebselement (3) angeordnetes elektrisch, mechanisch, pneumatisch oder hydraulisch aktuiertes Betätigungssystem (5) verfügt, welches wiederum ein Schaltglied (6) beinhaltet, das durch Aktuierung des Betätigungssystems (5) zwischen einer Schaltstartstellung (7) und einer Schaltendstellung (9) bewegt werden kann, wobei in der Schaltendstellung (9) eine Wirkverbindung zwischen einer auf dem Schaltglied (6) befindlichen ersten Reibfläche (6.1) und einer auf dem Antriebselement (2) angeordneten zweiten Reibfläche (2.1) hergestellt wird, wodurch schließlich zwischen dem Antriebselement (2) und dem Abtriebselement (3) eine reibschlüssige Verbindung entsteht, sodass ein Drehmoment vom Antriebselement (2) zum Antriebselement (3) geleitet werden kann,
**dadurch gekennzeichnet, dass**
die schaltbare Kupplung (1) eine mit dem Abtriebselement (3) verbundene Hilfskupplung (4) mit dreh- und/oder verschiebbeweglich gelagerten Verriegelungskörpern (13) aufweist, wobei diese Verriegelungskörper (13) nach Deaktuierung des Betätigungssystems (5) und der daraus resultierenden Bewegung des Schaltgliedes (6) aus der Schaltendstellung (9) in Richtung der Schaltstartstellung (7) ab einer bestimmten Drehzahl des Abtriebselementes (3) durch die angreifenden Beschleunigungskräfte entgegen der Kraft eines oder mehrerer Rückstellelemente (15) in eine reib- oder/und formschlüssige Wirkverbindung mit dem Antriebselement (2) kommen,
wobei diese Wirkverbindung zwischen den Verriegelungskörpern (13) und dem Antriebselement (2) auch nach einer Deaktuierung des Betätigungssystems (5) aufrechterhalten wird und erst dann unterbrochen wird, wenn die Drehzahl des Antriebselementes (2) und damit des Abtriebselementes (3) so abfällt, dass die Verriegelungskörper (13) durch die Kraft des Rückstellelementes (15) aus der Wirkverbindung mit dem Antriebselement (2) gelangen.

2. Schaltbare Kupplung (1) nach Anspruch 1, **dadurch gekennzeichnet, dass** die Hilfskupplung (4) einen mit dem Abtriebselement (3) in Verbindung stehenden Flansch (11) beinhaltet, auf dem ein oder mehrere Haltebolzen (12.1) und/oder Führungen (12) angeordnet sind, wobei auf jedem Haltebolzen (12.1) bzw. in jeder Führung (12) je ein Verriegelungskörper (13) dreh- oder verschiebbeweglich sitzt und die Bewegung jedes Verriegelungskörpers (13) um den Haltebolzen (12.1) bzw. in der Führung (12) durch wenigstens einen Anschlag (14) auf dem Flansch (11) in einer Richtung begrenzt ist und wobei auf dem Flansch (11) für die Verriegelungskörper (13) ein oder mehrere Rückstellelemente (15) angeordnet sind, welche die Verriegelungskörper (13) gegen diese Anschläge (14) drücken.

3. Schaltbare Kupplung (1) nach mindestens einem der Ansprüche 1 bis 2, **dadurch gekennzeichnet, dass** die Rückstellelemente (15) so an den Verriegelungskörpern (13) angreifen, dass die Verriegelungskörper (13) unterhalb einer bestimmten Drehzahl des Abtriebselements (3) auch noch gegen ein Restklemmmoment und entgegen der wirkenden Beschleunigungskräfte außer Eingriff mit der Nut (17) bzw. der Wirkfläche (2.3) gebracht werden können.

4. Schaltbare Kupplung (1) nach mindestens einem der Ansprüche 1 bis 3, **dadurch gekennzeichnet, dass** auf dem Abtriebselement (3) ein Flansch (11) derart angebracht ist, so dass dieser zum einen entlang der Achse (A) verschiebbeweglich ist und zum anderen ein Drehmoment über den Flansch (11) zum Abtriebselement (3) geleitet werden kann, wobei das Schaltglied (6) mit dem Flansch (11) fest verbunden ist.

5. Schaltbare Kupplung (1) nach mindestens einem der Ansprüche 1 bis 3, **dadurch gekennzeichnet, dass** auf dem Abtriebselement (3) ein Flansch (11) fest angebracht ist, wobei dieser Flansch (11) einen ersten Führungsbereich (11.1) aufweist, der mit einem zweiten Führungsbereich (6.2), welcher sich am Schaltglied (6) befindet, in Verbindung steht, so dass das Schaltglied (6) relativ zum Flansch (11) entlang der Achse (A) verschiebbeweglich ist und zum anderen über das Schaltglied (6) ein Drehmoment zum Flansch (11) und zum Abtriebselement (3) geleitet werden kann.

6. Schaltbare Kupplung (1) nach mindestens einem der Ansprüche 1 bis 5, **dadurch gekennzeichnet, dass** durch Aktuierung des Betätigungssystems (5) das Schaltglied (6) entgegen der Kraft eines Rückstellelementes (21) aus der Schaltstartstellung (7) in die Schaltendstellung (9) bewegbar ist und sich das Schaltglied (6) nach Deaktuierung des Betätigungssystems (5) infolge der Kraft des Rückstellelementes (21) aus der Schaltendstellung (9) in die Schaltstartstellung (7) zurückbewegt.

7. Schaltbare Kupplung (1) nach mindestens einem der Ansprüche 1 bis 6, **dadurch gekennzeichnet, dass** bei der Bewegung des Schaltglieds (6) in Richtung der Schaltendstellung (9) ab einer Schaltzwischenstellung (8) eine erste Wirkfläche (20), welche sich auf jedem Verriegelungskörper (13) befindet, mit einer zweiten Wirkfläche (19), die entweder auf dem Schaltglied (6) oder dem Antriebselement (2) angebracht ist, in Kontakt kommt, und zwar in der Art, dass dadurch die Bewegung der Verriegelungskörper (13) um die Haltebolzen (12.1) bzw. in den Führungen (12) behindert wird und dass bei der Bewegung des Schaltglieds (6) in Richtung der Schaltstartstellung (7) ab einer Schaltzwischenstellung (8) diese beiden Wirkflächen (19 und 20) außer Kontakt kommen, so dass die Beweglichkeit der Verriegelungskörper (13) wieder hergestellt wird.

8. Schaltbare Kupplung (1) nach mindestens einem der Ansprüche 1 bis 7, **dadurch gekennzeichnet, dass** sich der Schwerpunkt der Verriegelungskörper (13) an einer Stelle außerhalb der Drehachse A13 der Verriegelungskörper (13) um die Haltebolzen (12.1) befindet, so dass ab einer bestimmten Drehzahl des Abtriebselements (3) die Verriegelungskörper (13) von den Anschlägen (14) abheben und sich gegen die Kraft des Rückstellelementes (15) bewegen, und dass die Verriegelungskörper (13) eine Wirkfläche (16) aufweisen, die bei dieser Bewegung mit einer Wirkfläche (2.3) auf dem Antriebselement (2) in eine reibschlüssige Klemmverbindung kommen, sodass ein Drehmoment vom Antriebselement (2) zum Abtriebselement (3) übertragen werden kann.

9. Schaltbare Kupplung (1) nach mindestens einem der Ansprüche 1 bis 7, **dadurch gekennzeichnet, dass** sich die Verriegelungskörper (13) um einen Haltebolzen (12.1) bzw. in einer Führung (12) entgegen der Kraft eines Rückstellelementes (15) infolge der wirkenden Beschleunigungskräfte bewegen können, sodass eine auf jedem Verriegelungskörpern (13) vorhandene erste Wirkfläche (16) mit einer zweiten Wirkfläche (17.1) in den Nuten (17) des Antriebselementes (2) in eine formschlüssige Wirkverbindung kommen, und somit ein Drehmoment formschlüssig vom Antriebselement (2) zum Abtriebselement (3) übertragen werden kann.

10. Schaltbare Kupplung (1) nach mindestens einem der Ansprüche 1 bis 9, **dadurch gekennzeichnet, dass** das Betätigungselement (5) in Form eines Elektromagneten ausgebildet ist, bei dessen Aktuierung/Betätigung das Schaltglied (6) entgegen der Kraft eines Rückstellelementes (21) aus der Schaltstartstellung (7) in die Schaltendstellung (9) bewegbar ist und dass nach Deaktuieren des Betätigungselementes (5) das Schaltglied (6) durch die Kraft des Rückstellelementes (21) aus der Schaltendstellung (9) in die Schaltstartstellung (7) bewegbar ist.

## Claims

1. Switchable coupling (1), in particular for passenger vehicle auxiliary units, which switchable coupling (1) has an activation system (5) which is arranged between a drive element (2) and an output element (3), is actuated electrically, mechanically, pneumatically or hydraulically, and in turn comprises a switching element (6) which can be moved between a switching start position (7) and a switching end position (9) by way of actuation of the activation system (5), an operative connection being produced in the switching end position (9) between a first friction face (6.1) which is situated on the switching element (6) and a second friction face (2.1) which is arranged on the drive element (2), as a result of which a frictional connection is finally produced between the drive element (2) and the output element (3), with the result that a torque can be conducted from the drive element (2) to the output element (3), **characterized in that** the switchable coupling (1) has an auxiliary coupling (4) which is connected to the output element (3) and has locking bodies (13) which are movably mounted rotatably and/or displaceably, the said locking bodies (13) passing into a frictionally locking and/or positively locking operative connection with the drive element (2) after deactuation of the activation system (5) and the resulting movement of the switching element (6) out of the switching end position (9) in the direction of the switching start position (7), above a defined rotational speed of the output element (3) as a result of the acting acceleration forces counter to the force of one or more restoring elements (15), the said operative connection between the locking bodies (13) and the drive element (2) also being maintained after a deactuation of the activation system (5) and being interrupted only when the rotational speed of the drive element (2) and therefore of the output element (3) drops in such a way that the locking bodies (13) pass out of the operative connection with the drive element (2) as a result of the force of the restoring element (15) .

2. Switchable coupling (1) according to Claim 1, **characterized in that** the auxiliary coupling (4) comprises a flange (11) which is connected to the output element (3) and on which one or more holding pins (12.1) and/or guides (12) are arranged, in each case one locking body (13) being movably seated rotatably or displaceably on each holding pin (12.1) and/or in each guide (12), and the movement of each locking body (13) about the holding pin (12.1) and/or in the guide (12) being limited in one direction by way of at least one stop (14) on the flange (11), and one or more restoring elements (15) being arranged for the locking bodies (13) on the flange (11), which restoring elements (15) press the locking bodies (13) against the said stops (14).

3. Switchable coupling (1) according to at least either of Claims 1 and 2, **characterized in that** the restoring elements (15) act on the locking bodies (13) in such a way that, below a defined rotational speed of the output element (3), the locking bodies (13) can still be brought out of engagement with the groove (17) and/or the active face (2, 3) counter to a residual clamping torque and counter to the acting acceleration forces.

4. Switchable coupling (1) according to at least one of Claims 1 to 3, **characterized in that** a flange (11) is attached on the output element (3) in such a way that firstly it can be moved displaceably along the axis (A) and secondly a torque can be conducted via the flange (11) to the output element (3), the switching element (6) being connected fixedly to the flange (11).

5. Switchable coupling (1) according to at least one of Claims 1 to 3, **characterized in that** a flange (11) is attached fixedly on the output element (3), the said flange (11) having a first guide region (11.1) which is connected to a second guide region (6.2) which is situated on the switching element (6), with the result that the switching element (6) can be moved displaceably along the axis (A) relative to the flange (11), and secondly a torque can be conducted via the switching element (6) to the flange (11) and to the output element (**3**).

6. Switchable coupling (1) according to at least one of Claims 1 to 5, **characterized in that**, by way of actuation of the activation system (5), the switching element (6) can be moved counter to the force of a restoring element (21) out of the switching start position (7) into the switching end position (9) and, after deactuation of the activation system (5), the switching element (6) moves back out of the switching end position (9) into the switching start position (7) as a consequence of the force of the restoring element (21) .

7. Switchable coupling (1) according to at least one of Claims 1 to 6, **characterized in that**, during the movement of the switching element (6) in the direction of the switching end position (9), from a switching intermediate position (8), a first active face (20) which is situated on each locking body (13) comes into contact with a second active face (19) which is attached either on the switching element (6) or the drive element (2), to be precise in such a way that, as a result, the movement of the locking bodies (13) around the holding pins (12.1) and/or in the guides (12) is impeded, and **in that**, during the movement of the switching element (6) in the direction of the switching start position (7), from a switching intermediate position (8), the said two active faces (19 and 20) pass out of contact, with the result that the mobility of the locking bodies (13) is reestablished.

8. Switchable coupling (1) according to at least one of Claims 1 to 7, **characterized in that** the centroid of the locking bodies (13) is situated at a location outside the rotational axis A13 of the locking bodies (13) around the holding pins (12.1), with the result that, from a defined rotational speed of the output element (3), the locking bodies (13) lift up from the stops (14) and move counter to the force of the restoring element (15), and **in that** the locking bodies (13) have an active face (16), which active faces pass into a frictionally locking clamping connection during this movement with an active face (2.3) on the drive element (2), with the result that a torque can be transmitted from the drive element (2) to the output element (3).

9. Switchable coupling (1) according to at least one of Claims 1 to 7, **characterized in that** the locking bodies (13) can move around a holding pin (12.1) and/or in a guide (12), counter to the force of a restoring element (15), as a consequence of the acting acceleration forces, with the result that a first active face (16) which is present on each locking body (13) passes into a positively locking operative connection with a second active face (17.1) in the grooves (17) of the drive element (2), and therefore a torque can be transmitted in a positively locking manner from the drive element (2) to the output element (3).

10. Switchable coupling (1) according to at least one of Claims 1 to 9, **characterized in that** the activation element (5) is configured in the form of an electromagnet, upon the actuation/activation of which the switching element (6) can be moved counter to the force of a restoring element (21) out of the switching start position (7) into the switching end position (9), and **in that**, after deactuation of the activation element (5), the switching element (6) can be moved by way of the force of the restoring element (21) out of the switching end position (9) into the switching start position (7).

## Revendications

1. Embrayage commutable (1), en particulier pour des unités auxiliaires dans un véhicule léger, qui dispose d'un système d'actionnement à commande électrique, mécanique, pneumatique ou hydraulique (5) disposé entre un élément d'entraînement (2) et un élément de prise de force (3), lequel système d'actionnement comprend à son tour un organe de commutation (6) qui peut être déplacé par l'actionnement du système d'actionnement (5) entre une position de début de commutation (7) et une position de fin de commutation (9), une liaison fonctionnelle entre une première surface de friction (6.1) se trouvant sur l'organe de commutation (6) et une deuxième surface de friction (2.1) disposée sur l'élément d'entraînement (2) étant établie dans la position de fin de commutation (9), de sorte qu'une liaison par engagement par friction soit finalement établie entre l'élément d'entraînement (2) et l'élément de prise de force (3) de sorte qu'un couple puisse être transmis de l'élément d'entraînement (2) à l'élément de prise de force (3),
**caractérisé en ce que**
l'embrayage commutable (1) présente un embrayage auxiliaire (4) connecté à l'élément de prise de force (3) avec des corps de verrouillage (13) supportés de manière déplaçable en rotation et/ou en translation, ces corps de verrouillage (13), après la désactivation du système d'actionnement (5) et le déplacement résultant de l'organe de commutation (6) de la position de fin de commutation (9) dans la direction de la position de début de commutation (7), à partir d'une vitesse de rotation déterminée de l'élément de prise de force (3), venant en liaison fonctionnelle par engagement par friction et/ou par engagement par correspondance de formes avec l'élément d'entraînement (2) sous l'effet des forces d'accélération s'exerçant à l'encontre de la force d'un ou de plusieurs éléments de rappel (15), cette liaison fonctionnelle entre les corps de verrouillage (13) et l'élément d'entraînement (2) étant également maintenue après une désactivation de l'élément d'actionnement (5) et n'étant interrompue que lorsque la vitesse de rotation de l'élément d'entraînement (2) et par conséquent de l'élément de prise de force (3) diminue de telle sorte que les corps de verrouillage (13) parviennent sous l'effet de la force de l'élément de rappel (15) hors de liaison fonctionnelle avec l'élément d'entraînement (2).

2. Embrayage commutable (1) selon la revendication 1, **caractérisé en ce que** l'embrayage auxiliaire (4) comprend une bride (11) en liaison avec l'élément de prise de force (3), sur laquelle sont disposés un ou plusieurs goujons de retenue (12.1) et/ou guides (12), un corps de verrouillage (13) reposant à chaque fois de manière déplaçable en rotation ou en translation sur chaque goujon de retenue (12.1) ou dans chaque guide (12) et le déplacement de chaque corps de verrouillage (13) autour du goujon de retenue (12.1) ou dans le guide (12) étant limité dans une direction par au moins une butée (14) sur la bride (11) et un ou plusieurs éléments de rappel (15) étant disposés sur la bride (11) pour les corps de verrouillage (13), lesquels pressent les corps de verrouillage (13) contre ces butées (14).

3. Embrayage commutable (1) selon au moins l'une quelconque des revendications 1 à 2, **caractérisé en ce que** les éléments de rappel (15) viennent en prise avec les corps de verrouillage (13) de telle sorte que les corps de verrouillage (13) puissent être amenés hors d'engagement avec la rainure (17) ou la surface fonctionnelle (2.3) en dessous d'une vitesse de rotation déterminée de l'élément de prise de force (3) également encore à l'encontre d'un couple de serrage résiduel et à l'encontre des forces d'accélération s'exerçant.

4. Embrayage commutable (1) selon au moins l'une quelconque des revendications 1 à 3, **caractérisé en ce qu'**une bride (11) est montée sur l'élément de prise de force (3) de telle sorte d'une part que celle-ci soit déplaçable en translation le long de l'axe (A) et d'autre part qu'un couple puisse être transmis par le biais de la bride (11) à l'élément de prise de force (3), l'organe de commutation (6) étant connecté fixement à la bride (11) .

5. Embrayage commutable (1) selon au moins l'une quelconque des revendications 1 à 3, **caractérisé en ce qu'**une bride (11) est montée fixement sur l'élément de prise de force (3), cette bride (11) présentant une première région de guidage (11.1), laquelle est en liaison avec une deuxième région de guidage (6.2) qui se trouve sur l'organe de commutation (6), de telle sorte que l'organe de commutation (6) puisse être déplacé en translation par rapport à la bride (11) le long de l'axe (A) et que d'autre part un couple puisse être transmis par le biais de l'organe de commutation (6) à la bride (11) et à l'élément de prise de force (3).

6. Embrayage commutable (1) selon au moins l'une quelconque des revendications 1 à 5, **caractérisé en ce que** par actionnement du système d'actionnement (5), l'organe de commutation (6) peut être déplacé à l'encontre de la force d'un élément de rappel (21) de la position de début de commutation (7) à la position de fin de commutation (9) et l'organe de commutation (6), après la désactivation du système d'actionnement (5) du fait de la force de l'élément de rappel (21), revient de la position de fin de commutation (9) dans la position de début de commutation (7).

7. Embrayage commutable (1) selon au moins l'une quelconque des revendications 1 à 6, **caractérisé en ce que** lors du déplacement de l'organe de commutation (6) dans la direction de la position de fin de commutation (9) à partir d'une position intermédiaire de commutation (8), une première surface fonctionnelle (20) qui se trouve sur chaque corps de verrouillage (13) vient en contact avec une deuxième surface fonctionnelle (19) qui est montée soit sur l'organe de commutation (6) soit sur l'élément d'entraînement (2), et ce de telle sorte que de ce fait le déplacement des corps de verrouillage (13) autour des goujons de retenue (12.1) ou dans les guides (12) soit empêché et que lors du déplacement de l'organe de commutation (6) dans la direction de la position de début de commutation (7) à partir d'une position intermédiaire de commutation (8), ces deux surfaces fonctionnelles (19 et 20) viennent hors de contact de telle sorte que la mobilité des corps de verrouillage (13) soit rétablie.

8. Embrayage commutable (1) selon au moins l'une quelconque des revendications 1 à 7, **caractérisé en ce que** le centre de gravité des corps de verrouillage (13) se trouve à un endroit à l'extérieur de l'axe de rotation A13 des corps de verrouillage (13) autour des goujons de retenue (12.1) de telle sorte qu'à partir d'une vitesse de rotation déterminée de l'élément de prise de force (3), les corps de verrouillage (13) se soulèvent des butées (14) et se déplacent à l'encontre de la force de l'élément de rappel (15), et **en ce que** les corps de verrouillage (13) présentent une surface fonctionnelle (16) qui, lors de ce déplacement, vient en liaison de serrage par engagement par friction avec une surface fonctionnelle (2.3) sur l'élément d'entraînement (2), de telle sorte qu'un couple puisse être transmis de l'élément d'entraînement (2) à l'élément de prise de force (3).

9. Embrayage commutable (1) selon au moins l'une quelconque des revendications 1 à 7, **caractérisé en ce que** les corps de verrouillage (13) peuvent se déplacer autour d'un goujon de retenue (12.1) ou dans un guide (12) à l'encontre de la force d'un élément de rappel (15) du fait des forces d'accélération s'exerçant, de telle sorte qu'une première surface fonctionnelle (16) prévue sur chaque corps de verrouillage (13) vienne en liaison fonctionnelle par engagement par correspondance de formes avec une deuxième surface fonctionnelle (17.1) dans les rainures (17) de l'élément d'entraînement (2), et que par conséquent un couple puisse être transmis par engagement par correspondance de formes de l'élément d'entraînement (2) à l'élément de prise de force (3) .

10. Embrayage commutable (1) selon au moins l'une quelconque des revendications 1 à 9, **caractérisé en ce que** l'élément d'actionnement (5) est réalisé sous la forme d'un électroaimant, dont l'actionnement/la commande permet de déplacer l'organe de commutation (6) à l'encontre de la force d'un élément de rappel (21) de la position de début de commutation (7) dans la position de fin de commutation (9), et **en ce qu'**après la désactivation de l'élément d'actionnement (5), l'organe de commutation (6) peut être déplacé par la force de l'élément de rappel (21) de la position de fin de commutation (9) dans la position de début de commutation (7).
